Europäisches Patentamt

European Patent Office

Office européen des brevets

(11) Publication number: **0 410 598 A1**

# EUROPEAN PATENT APPLICATION

(21) Application number: 90307367.4

(51) Int. Cl.⁵: **F16D 65/56**

(22) Date of filing: 05.07.90

(30) Priority: 13.07.89 GB 8916046

(43) Date of publication of application:
30.01.91 Bulletin 91/05

(84) Designated Contracting States:
DE FR GB IT SE

(71) Applicant: LUCAS INDUSTRIES PUBLIC
LIMITED COMPANY
Great King Street
Birmingham, B19 2XF(GB)

(72) Inventor: **Margetts, Hugh Grenville**
**26 Redwood Close**
**Ross on Wye, Herefordshire Hr9 5UD(GB)**
Inventor: **Thompson, Richard Edgar**
**5 Claypatch Road**
**Wyesham, Monmouth, Gwent NP5 3PN(GB)**

(74) Representative: **Waite, Anthony William et al**
**MARKS & CLERK Alpha Tower Suffolk Street**
**Queenswayway**
**Birmingham B1 1TT(GB)**

(54) Brake actuator.

(57) A brake actuator has a force applying means 7 actuated by a rotary actuator shaft 6 and arranged to separate opposed tappets 14 to actuate braking elements 1, 2. The tappets are of variable length controlled by adjuster means to maintain a substantially constant predetermined clearance between the braking elements and a braking surface. The tappets 14 are interconnected by a ring gear 28 concentric with the shaft 6, the ring gear being driven by the shaft 6 via the adjuster mechanism 20 to adjust both tappets 14 simultaneously.

FIG.2.

FIG.3.

## BRAKE ACTUATOR

This invention relates to a brake actuator, primarily for use in a vehicle and being of the general kind including force-applying means actuated by a rotary actuator shaft and arranged to separate opposed tappets which transmit thrust from said means to braking elements engaged, in use, by the tappets in order to urge said elements against a rotary braking surface, each tappet including a pair of threadedly interengaged members which are relatively rotatable to enable the length of each tappet to be varied, and adjuster means operable via transmission means to vary the length of the tappets in response to excessive outward movement of the braking elements in order to maintain a substantially constant predetermined clearance between the braking elements and said braking surface.

An actuator of the aforesaid kind is illustrated in our earlier British Patent No. 2062784 and includes an adjuster which operates to adjust the length of one of the tappets to compensate for wear in a friction element of the brake, and transmission means interconnecting the tappets and effecting simultaneous corresponding adjustment of the other tappet. In the illustrated arrangement, the adjuster means is disposed adjacent said one tappet and incorporates an adjuster shaft extending generally parallel to the rotary actuator shaft. Whilst operating satisfactorily in practice, this adjuster mechanism is relatively complex and requires a correspondingly complex and somewhat bulky actuator housing to incorporate the various components.

An object of the present invention is to provide a brake actuator of the aforesaid general kind in which simultaneous adjustment of the tappets is achieved by means of a relatively simple and compact mechanism.

According to the invention, there is provided a brake actuator of the aforesaid general kind in which the tappets are interconnected by a ring gear co-axial with the rotary actuator shaft, the ring gear being driven by the rotary shaft via an adjuster means to adjust both tappets simultaneously.

In a preferred arrangement, the ring gear is disposed between the force-applying means, which is conveniently a cam device, and the adjuster means.

Typically, the ring gear and adjuster means surround the rotary shaft and the ring gear preferably forms a generally cylindrical housing containing the adjuster means.

The invention will now be described, by way of example, with reference to the accompanying drawings in which:-

Figure 1 is a front view of an internal shoe drum brake incorporating the actuator of the invention;

Figure 2 is an enlarged cross-sectional view of the actuator of Figure 1;

Figure 3 is a cross-section along the line A-A of Figure 1;

Figure 4 is a view similar to Figure 3 illustrating an alternative form of the actuator of the invention, and

Figure 5 is a view similar to Figure 4 illustrating a further alternative form of the actuator of the invention.

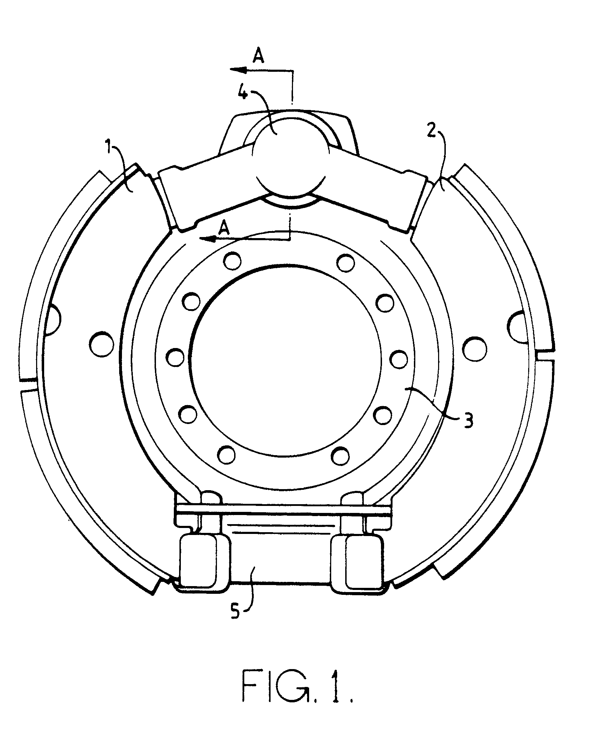

Figure 1 of the drawings illustrates an internal shoe drum brake which includes a pair of brake shoes 1, 2 mounted on a stationary torque plate 3, which also carries a mechanical actuator 4, being conveniently of the cam type, disposed between one pair of adjacent shoe ends and operable to urge the shoes outwardly into braking engagement with a brake drum against the action of shoe return means, neither the brake drum or return means being illustrated. The other adjacent shoe ends engage an abutment 5 which is secured to or integral with the torque plate 3. The illustrated brake would normally act as a leading/trailing shoe brake with each of the shoes playing a leading or trailing role depending upon the direction of rotation of the brake drum, as will be well understood by those familiar with the art.

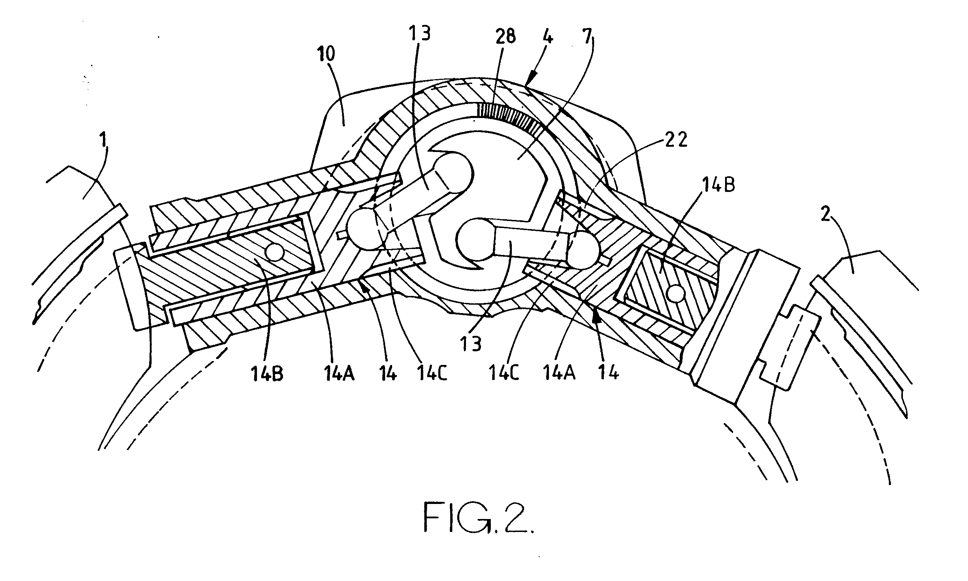

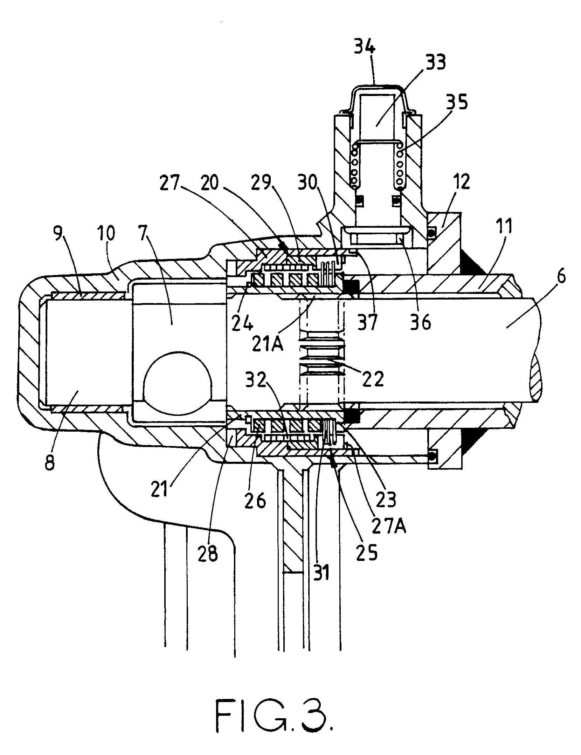

Referring more particularly to Figure 2 and 3, the actuator 4 will be seen to include a cam shaft 6 having a cam 7 mounted thereon or integral therewith. The shaft extends beyond the cam 7 to form a journal 8 rotatably mounted within a plain sleeve bearing 9 press fitted or otherwise secured in the actuator housing 10. The main length of the cam shaft 6 is contained within a coaxial tube 11, being rotatably supported therein by one or more further bearings (not shown). The free extremity of the cam shaft is operatively connected to a motive device in the form of an air chamber, none of which mechanism is illustrated but which will be understood by those familiar with the art. The tube 11 has a surrounding flange 12 secured to its forward end, the flange being, in turn, fixed around an open end of the housing 10 for support thereon. As can be seen particularly from Figure 2, the cam 7, when rotated in one direction applies thrust via struts 13 to opposed tappets 14 of the actuator 4, of which the ends can be seen engaged respectively with the shoes 1, 2. Each of the tappets is composed of a pair of threadedly interengaged components 14A, 14B which enable the length of the tappets to be varied by relative rotation between these components in order to maintain a predetermined clearance between the braking surfaces of the shoes and drum. Both of the tappets are adjusted simultaneously, in response to shoe lining wear, by an adjuster device illustrated generally at 20 and disposed at the side of the cam remote from the bearing 9, the adjuster device being operatively associated with external peripheral teeth or splines 14C formed on the tappet portions 14A.

The adjuster mechanism 20 includes a sleeve 21 closely surrounding the cam shaft 6 adjacent the cam 7 and having a row of peripheral internal teeth or splines 22 for engagement with a corresponding formation 21A on the shaft so that the sleeve and shaft are in rotary driving engagement. The sleeve has a radial flange 23, between which and a circlip 24 are disposed a multi-plate clutch, indicated generally at 25, and a helical spring 26 which loads the clutch into its operative condition. All of the aforesaid components are disposed within a cylindrical capsule 27 and retained therein by a circlip 27A, the forward peripheral edge 28 of which constitutes a ring gear which engages the teeth or splines 14C on the respective tappets 14 (Figure 2) so as to drive both tappets simultaneously for adjustment purposes, in the manner to be described. Lying closely within the inner surface of the capsule 27 is a further cylindrical sleeve 29 which provides a slot 30 engaged by radially projecting tags 31 carried by alternate elements of the friction clutch 25 enabling drive to be applied from the sleeve 21 to the capsule 27. A wrap spring 32 overlaps the components 27 and 29 and lies against the radially inner surfaces thereof.

When the cam shaft 6 is turned in a direction to actuate the brakes, the cam 7 separates the tappets 14 to apply the shoes 1 and 2 against the brake drum. Clearance is provided in the teeth 22 to enable the shoes to be moved through a predetermined shoe to drum clearance without causing operation of the adjuster. Alternatively, such clearance could be arranged between the slot 30 and the tags 31 or at the geared connection between the tappets and the ring gear or at any combination of these locations. When this clearance is exceeded as a result of shoe lining wear, continued rotation of the cam shaft will rotate the sleeve 21 and, via the clutch 25, the sleeve 29 which is effectively locked by the wrap spring 32 for this direction of rotation to the capsule 27, thereby causing the latter to rotate so as to rotate the tappet parts 14A via the splines 14C and so lengthen the tappets. This action will continue until the friction between the interengaged threads of the tappets increases, due to increasing loading of the brake, sufficiently to overcome the frictional force of the clutch 25 which then slips in order to prevent deflections of the brake components from causing over-adjustment of the brake. Continued rotation of the cam shaft will, therefore, increase the braking force without causing further adjustment of the tappets.

At the end of a braking operation, the cam shaft is turned in the reverse direction and an initial drag force exerted by the wrap spring 32 in this direction enables the sleeve 29 to drive the sleeve 21 via the clutch 25 which is no longer slipping, to permit the ring gear 28 to move back through the predetermined adjuster clearance. The wrap spring thereupon ceases to exert sufficient force to maintain the sleeve 29 and capsule 27 rotating as one component and the capsule then ceases to rotate, leaving the tappets in their newly adjusted positions, while the sleeve 29 returns with the cam shaft until the latter achieves its fully off position. A manual over-ride shaft 33, accessible from the exterior of the adjuster by removal of a cover 34, may be pushed inwardly against the action of a spring 35 to engage peripheral teeth 36 on the inner end of the shaft with corresponding teeth 37 on the rear peripheral edge of the capsule 27 and thus enables the adjuster to be wound back manually when required, in order to service the adjuster, for example. The shaft 33 is shown in its illustrated position for the purpose of illustration, but would in practice be at a position displaced by about $90°$ for example around the housing 10.

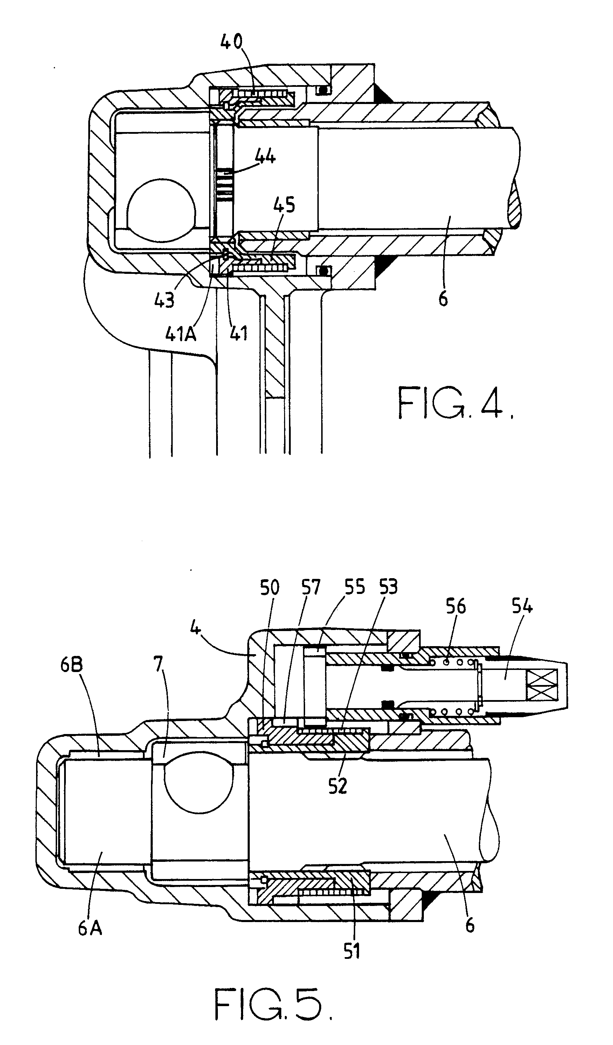

In the alternative embodiment of the actuator illustrated in Figure 4, the multi-plate clutch of the previous embodiment is dispensed with and adjustment is effected using a single wrap spring 40 which surrounds the outer cylindrical surfaces of a ring gear component 41 and a drive sleeve 42 held together axially by a circlip 43. The sleeve 42 is drivingly connected to the cam shaft 6 by way of internal peripheral teeth or splines 44 and corresponding formations on the shaft, between which there is a degree of play in order to provide the necessary shoe to drum clearance. When the cam shaft 6 rotates in a direction to apply the brake, the wrap spring 40 forms a rigid driving connection between the sleeve 42 and ring gear 41, enabling the ring gear 41A to rotate and elongate the tappets, if required due to excessive lining wear. When the shoes contact the drum, the friction in the tappet threads produces a torque which overcomes the friction of the wrap spring, enabling the brake to be further loaded, without continued extension of the tappets. Reverse rotation of the cam shaft to release the brake initially rotates the ring gear to re-establish the predetermined brake clearance, following which the wrap spring slips to permit the sleeve 42 to be returned to its initial position, leaving the ring gear in a newly adjusted position.

Figure 5 illustrates a further alternative embodiment in which the cam shaft 6 is extended to form a journal 6A beyond the cam 7, the journal being supported in a plain bearing 6B housed within an extension of the actuator housing 4. The adjuster again comprises a ring gear 50 and a drive sleeve 51 drivingly coupled to the cam shaft via teeth 52. A wrap spring 53 surrounds cylindrical surface portions of the ring gear component 50 and sleeve 51 and the operation of this adjuster is identical with that illustrated in Figure 4. A manual adjuster shaft 54 is rotatably mounted in the housing 4 and extends parallel with the cam shaft 6. The shaft is provided at its inner end with teeth 55 which, when the shaft is pushed inwardly against a spring 56, engage corresponding teeth 57 on the ring gear to enable the adjuster to be manually operated, when required.

It will be seen that the actuator of the invention is provided with automatic adjustment means of simple and convenient form which permits the simultaneous adjustment of the tappets whilst permitting the use of a relatively compact housing. An advantageous feature is that the ring gear capsule and sleeve are arranged to house the other adjuster components to form a self-contained unit which may be readily removed from the actuator after detachment of the cam shaft tube.

## Claims

1. A brake actuator comprising force applying means (7) actuated by a rotary actuator shaft (6) and arranged to separate opposed tappets (14) which transmit thrust from said means to braking elements (1, 2) engaged, in use, by the tappets in order to urge said elements against a rotary braking surface, each tappet including a pair of threadedly interengaged members (14A, 14B), which are relatively rotatable to enable the length of each tappet to be varied, and adjuster means (20) operable via transmission means (27, 28) to vary the length of the tappets in response to excessive outward movement of the braking elements in order to maintain a substantially constant predetermined clearance between the braking elements and said surface, characterised in that the transmission means is a ring gear (28) co-axial with the rotary actuator shaft (6), the ring gear being driven by the shaft via the adjuster means (20) to adjust the tappets simultaneously.

2. A brake actuator according to Claim 1, characterised in that the ring gear (28) is disposed between the force-applying means (7) and the adjuster means (20).

3. A brake actuator according to Claim 1 or Claim 2, characterised in that the force applying means is a cam device (7).

4. A brake actuator according to any one of Claims 1 to 3, characterised in that the ring gear (28) and adjuster means (20) surround the rotary shaft (6).

5. A brake actuator according to any one of the preceding claims, characterised in that the ring gear forms a generally cylindrical housing (27) containing the adjuster means (20).

6. A brake actuator according to any one of the preceding claims, characterised in that the shaft (6) is operatively connected to the adjuster means by way of a sleeve (21) with which it forms a rotary driving connection (22, 21A), and a clutch device (25) co-acting with the sleeve (21).

7. A brake actuator according to Claim 5, characterised in that the housing (27) is disposed coaxially relative to a cylindrical drive member (29), and a wrap spring (32) overlaps adjacent surfaces of the housing (27) and drive member (29) and acts to provide a drive connection between the two in one direction, the drive member (29) forming a driving connection with a clutch device (25) through which drive is transmitted from the shaft (6) to the member (29).

8. A brake actuator according to any one of Claims 5 to 7, characterised in that a manual adjuster shaft (33) is rotatably mounted in the actuator housing (10) and is provided adjacent its inner end with formations (36), the shaft being axially movable against return means (35) to bring the formations (36) into engagement with corresponding formations (37) on the housing (27), whereby with the formations (36, 37) so engaged, the housing (27) may be rotated in a de-adjusting direction by rotation of the shaft (33).

9. A brake actuator according to Claim 8, characterised in that the respective axes of the shaft (33) and housing (27) are mutually perpendicular.

10. A brake actuator according to any one of Claims 1 to 4, characterised in that the actuator shaft (6) has a positive driving connection with a drive sleeve (42) which is co-axial with a member (41) carrying the ring gear (41A), and a wrap spring (40) overlaps adjacent surfaces of the sleeve (42) and member (41) and acts to provide a drive connection between the two in one direction such that the ring gear is rotated by rotation of the shaft in said one direction to elongate the tappets (14).

11. A brake actuator according to Claim 10, characterised in that the ring gear (41, 50) surrounds the drive sleeve (42, 51).

12. A brake actuator according to Claim 10, characterised in that the ring gear member (50) has formations (57) for engagement by formations (55) on an axially extending manual adjuster shaft (54) which is axially movable against return means (56) to bring the formations (57, 55) into engagement, enabling the members (50) to be moved in a de-adjusting direction by rotation of the shaft (54).

13. A brake incorporating an actuator according to any one of the preceding claims.

FIG. 1.

FIG.2.

FIG.3.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 121 896 (S.E. CAMPH) <br> * The whole document * <br> _ _ _ | 1 | F 16 D 65/56 |
| A | FR-A-2 224 676 (S.E. CAMPH) <br> * Figures 2,3 * <br> _ _ _ | 1 | |
| A,D | GB-A-2 062 784 (LUCAS INDUSTRIES LTD) <br> * The whole document * <br> _ _ _ _ _ | 1 | |

| | TECHNICAL FIELDS SEARCHED (Int. Cl.5) |
|---|---|
| | F 16 D 65/00 |

The present search report has been drawn up for all claims

| Place of search | Date of completion of search | Examiner |
|---|---|---|
| The Hague | 16 November 90 | BRAEMS C.G.I. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document